# EUROPEAN PATENT APPLICATION

(11) **EP 3 456 434 A1**
(43) Date of publication of application: **20.03.2019**
(21) Application number: 18195179.9
(22) Date of filing: 18.09.2018
(51) Int. Cl.: B22C 9/02, B22C 9/08, B22C 9/10, B22C 21/14

(54) **IMPROVEMENTS RELATING TO BRAKE DISC CASTING PROCESSES AND APPARATUS**

(30) Priority: 18.09.2017 GB 201714996
(71) Applicant: Nissan Motor Iberica SA, 08040 Barcelona, Catalonia (ES)
(72) Inventor: FERNANDEZ RUIZ, Jose Manuel, 39400 LOS CORRALES DE BUELNA CANTABRIA (ES); RUIZ BLANCO, Bernardino, 39400 LOS CORRALES DE BUELNA CANTABRIA (ES)

(57) **Abstract**

A casting apparatus for casting brake disc components includes a drag and a cope, which are cooperable to form a mould and which are configured to mate at a generally planar interface that defines an interface plane. The drag comprises a plurality of drag recesses, and the cope comprises a plurality of cope recesses, that together form a plurality of discoidal mould voids for producing brake disc components. Each of the discoidal mould voids defines a disc plane substantially normal to the interface plane. A method and pattern plate are also described.

## Description

### TECHNICAL FIELD

The present disclosure relates to a method for use in the manufacture of at least one brake disc component, a pattern plate and a core element for use with the method, a moulded brake disc component, and an unfinished moulded product.

### BACKGROUND

It is known to use a moulding process to mould metallic components. For example, a brake disc may be moulded in a sand mould. Suitable recesses are formed in sand in a drag and a cope. The drag and cope are assembled such that pairs of the recesses align to form a mould void. A molten metal, such as an iron-based alloy, is directed into the mould void via sprues and/or runners. Once the metal has cooled and solidified, the brake disc can be demoulded. Machining operations such as turning, milling, and drilling may then be performed on the brake disc to complete it.

Individually moulding each brake disc in its own mould requires preparation of an individual drag and cope pair for each brake disc, which is time consuming.

It is an object of the present invention to address these and other shortcomings of the prior art, or at least to provide a useful alternative thereto.

### SUMMARY OF THE INVENTION

Aspects and embodiments of the invention provide a method for use in the manufacture of at least one brake disc component, a pattern plate and a core element for use with the method, a moulded brake disc component, and an unfinished moulded product as claimed in the appended claims.

According to an aspect of the invention, there is provided a casting apparatus for casting brake disc components, the casting apparatus comprising a drag, and a cope, which are cooperable to form a mould and which are configured to mate at a generally planar interface that defines an interface plane, wherein the drag comprises a plurality of drag recesses, and wherein the cope comprises a plurality of cope recesses, such that when the drag and the cope are combined, said plurality of drag and cope recesses form a respective plurality of mould voids which are discoidal in form so as to produce respective brake disc components therein, wherein each of the discoidal mould voids defines a disc plane, and wherein the interface plane is substantially normal to the disc plane.

The interface plane may intersect the disc plane.

The interface plane may substantially bisect the or each mould void.

The mould may include a runner configured to feed each one of the mould voids.

The mould may include a distribution void that is configured to feed each of the runners.

The distribution void may have a variable cross section along its length.

The distribution void may be configured to define a central inlet and one or more arms that radiate away from the central inlet, wherein the runners extend from respective positions along the arms towards respective mould voids.

The distribution void may have a relatively large cross section proximal to its central inlet, and the cross section of the arms of the distribution void may reduce in correspondence to the number of runners that are to be fed by the distribution void.

Each of the mould voids may receive a core element that partitions the mould void into at least a first void portion within which a brake disc component may be produced.

The core element may further partition the mould void into a second void portion within which a further brake disc component may be produced from the same mould void.

The core element may cooperate with at least a part of the mould void to define a respective runner for that mould void so that molten material can be supplied thereto.

The plurality of mould voids may be arranged into at least one row that is arranged linearly so that the disc planes of each of the mould voids are generally mutually parallel.

According to another aspect of the invention, there is provided a method for use in the manufacture of at least one brake disc component. The method comprises providing a mould, the mould comprising a drag comprising a plurality of drag recesses and a cope comprising a plurality of cope recesses. The drag and the cope are configured to mate at a generally planar interface that defines an interface plane. Each of the cope recesses aligns with a corresponding one of the at least one drag recesses to define a mould void when the cope and drag are assembled prior to a subsequent casting process. Each of the mould voids are discoidal in form so as to produce respective brake disc component therein during casting, wherein each of the discoidal mould voids defines a disc plane and wherein the interface plane is transverse to the disc plane.

The interface plane may intersect the disc plane.

The interface plane may substantially bisect the mould voids.

The drag may be configured to define runner channels, each runner channel being configured to extend underneath a respective one of the mould voids so as to feed molten material thereto.

The method may include configuring the cope or the drag to define a distribution channel having a central inlet and one or more distribution arms radiating away from the central inlet and from which the runners extend.

The distribution channel may have a relatively large cross section proximal to its central inlet, and the cross section of the arms of the distribution channel may reduce in correspondence to the number of runners that are to be fed by the distribution channel.

The method may include receiving a core element into each of the mould voids so as to partition those mould voids into at least a first mould portion within which a brake disc component may be produced.

The core element may further partition the mould void into a second void portion within which a further brake disc component may be produced from the same mould void.

The core element may cooperate with at least a part of the mould void to define a respective runner for that mould void so that molten material can be supplied thereto.

The runner may include a gate that permits molten material to flow into the mould void from the runner.

According to another aspect of the invention, there is provided a pattern plate comprising a planar base and a plurality of protrusions projecting from the base, the plurality of protrusions forming a plurality of discoidal brake disc formations each defining a disc plane, wherein the disc planes of each of the plurality of brake disc formations are generally mutually parallel and generally normal to the base.

Each of the brake disc formations may include a runner-forming formation extending from a respective one of the brake disc formations.

Each of the runner-forming formations may include a gate-forming formation extending therefrom.

Each of the protrusions may define a drag guide formation configured to form, in a respective drag, a guide for cooperating with a core element.

The pattern plate may comprise a cope guide formation configured to form, in a respective cope, a cope guide for the core element.

The pattern plate may comprise at least one distribution void formation, wherein when the pattern plate is used to form the cope, the or each distribution void formation forms a distribution void in the form of a recess in the cope that is not directly connected, in the cope, to the or each cope recess.

The distribution void may have a variable cross section along its length.

The distribution void may be configured to define a central inlet and one or more arms that radiate away from the central inlet,

The distribution void may have a relatively large cross section proximal to its central inlet, and the cross section of the arms of the distribution void may reduce in correspondence to the number of outlets that are to be fed by the distribution void.

According to another aspect of the invention, there is provided a moulded brake disc component manufactured using the casting apparatus, method, or pattern plate of any of the above aspects.

Within the scope of this application it is expressly intended that the various aspects, embodiments, examples, and alternatives set out in the preceding paragraphs, in the claims and/or in the following description and drawings, and in particular the individual features thereof, may be taken independently or in any combination. That is, all embodiments and/or features of any embodiment can be combined in any way and/or combination, unless such features are incompatible. The applicant reserves the right to change any originally filed claim or file any new claim accordingly, including the right to amend any originally filed claim to depend from and/or incorporate any feature of any other claim although not originally claimed in that manner.

### BRIEF DESCRIPTION OF THE DRAWINGS

One or more embodiments of the invention will now be described, by way of example only, with reference to the accompanying drawings, in which:
Fig. 1 is a perspective view of a brake disc cast in a mould prepared using a method according to an embodiment of the invention;
Fig. 2 is a sectional view of the brake disc of Fig. 1;
Fig. 3 is a vehicle according to an embodiment of the invention;
Fig. 4 is a plan view of a drag prepared using a method according to an embodiment of the invention;
Fig. 5 is a perspective view of the drag of Fig. 4;
Fig. 6 is a plan view of the drag of Figs 4 and 5, with core elements in place;
Fig. 7 is a perspective view of the drag of Fig. 6;
Fig. 8 is a vertical cross-section through the drag of Figs 6 and 7;
Fig. 9. is a vertical longitudinal section through the drag of Figs 6 and 7;
Fig. 10 is a perspective view of a pattern plate according to an embodiment of the invention;
Fig. 11 is a side elevation of the pattern plate of Fig. 10;
Fig. 12 is a perspective view of a flask positioned on the pattern plate of Figs 10 and 11;
Fig. 13 is a plan view of a cope prepared using a method according to an embodiment of the invention;
Fig. 14 is a perspective view of the cope of Fig. 13;
Fig. 15 is a perspective view of a pattern plate according to an embodiment of the invention;
Fig. 16 is a side elevation of the pattern plate of Fig. 15;
Fig. 17 is a longitudinal section through the drag of Figs 4 and 5 and the cope of Figs 13 and 14, with the cope being lowered onto the drag;
Fig. 18 is the longitudinal section of Fig. 17 with the cope in its final position on the drag;
Fig. 19 is a detailed longitudinal section through the drag of Figs 4 and 5;
Fig. 20 is a detailed cross-section through the drag of Figs 4 and 5;
Fig. 21 is a perspective view of a core element according to an embodiment of the invention;
Fig. 22 is a cross-section through the core element of Fig. 21;
Fig. 23 is a detailed longitudinal section as shown in Fig. 19, showing flow of a molten material during casting;
Fig. 24 is a perspective view of a cast prepared using a mould comprising the cope and drag of Fig. 18, with the mould and core elements removed;
Fig. 25 is an underside perspective view of the cast of Fig. 24;
Fig. 26 is a cross-section of a core element according to an embodiment of the invention; and
Fig. 27 is a plan view of a portion of a drag for use with the core element of Fig. 26.

### DETAILED DESCRIPTION

The following describes a method for use in the manufacture of at least one brake disc component, together with casting apparatus that is appropriate for use with that method. Such casting apparatus may include a respective mould including cope and drag parts of the mould, pattern plates for forming mould recesses, cavities, voids in the cope and the drag, and a core element for use with the method, and for cooperating with the voids in the mould. There is also disclosed a moulded or cast brake disc component, and an unfinished moulded product.

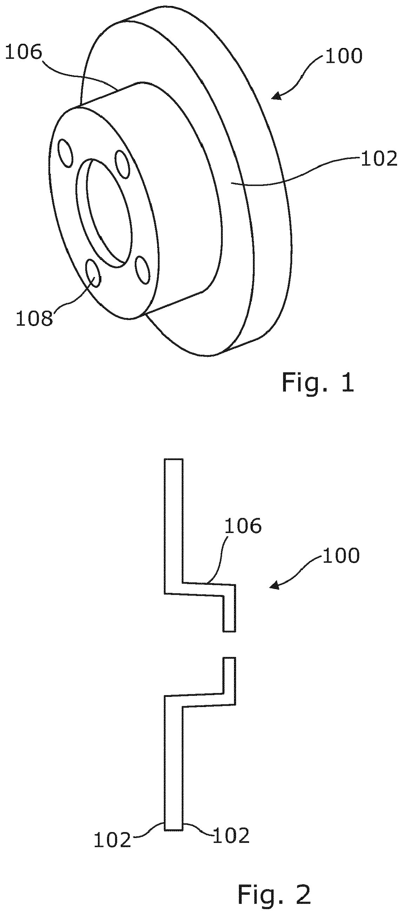

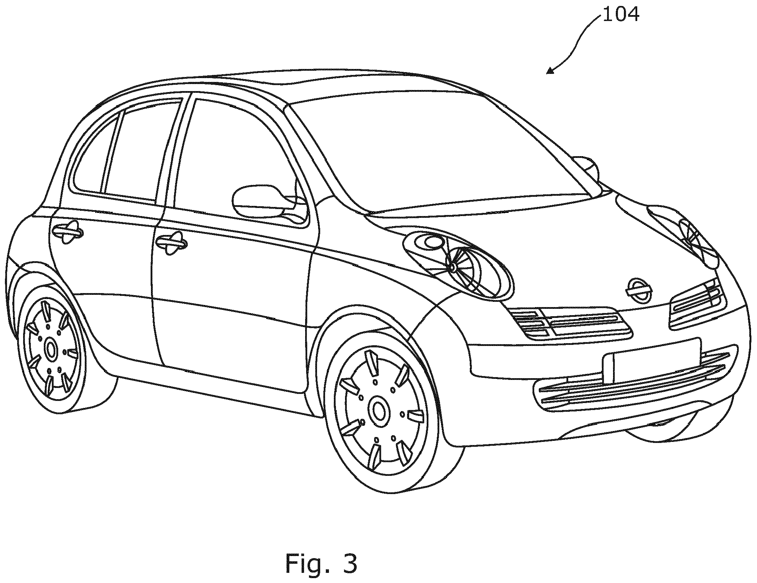

Turning firstly to Figs. 1 and 2, an embodiment of a moulded brake disc component is a generally disc-shaped brake disc 100. A planar friction surface 102 is disposed on both sides of a radially outer section of the brake disc 100, to interact with brake pads (not shown) driven by brake callipers (not shown) when installed on a vehicle such as car 104 shown in in Fig. 3. The brake disc 100 includes an axial hat 106 that includes mounting holes 108 for use in mounting the brake disc 100 to a hub (not shown) of the car 104. Figs. 1 and 2 show one form of brake disc, which will be the subject of the moulding processes described here. However, it should be noted that the precise form of the brake disc as shown here is for explanatory purposes only and is not essential. Accordingly, the skilled person will understand that other shapes of brake disc components are possible.

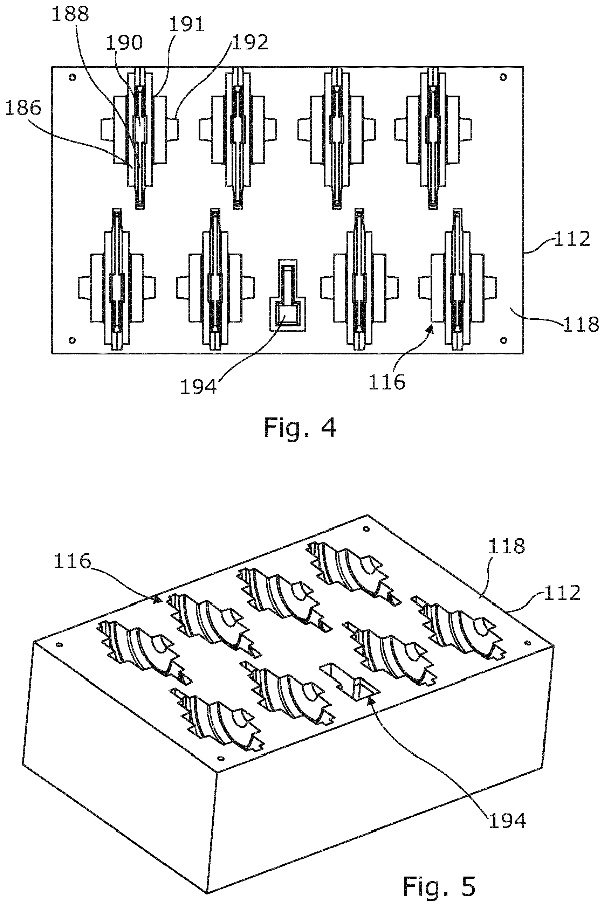

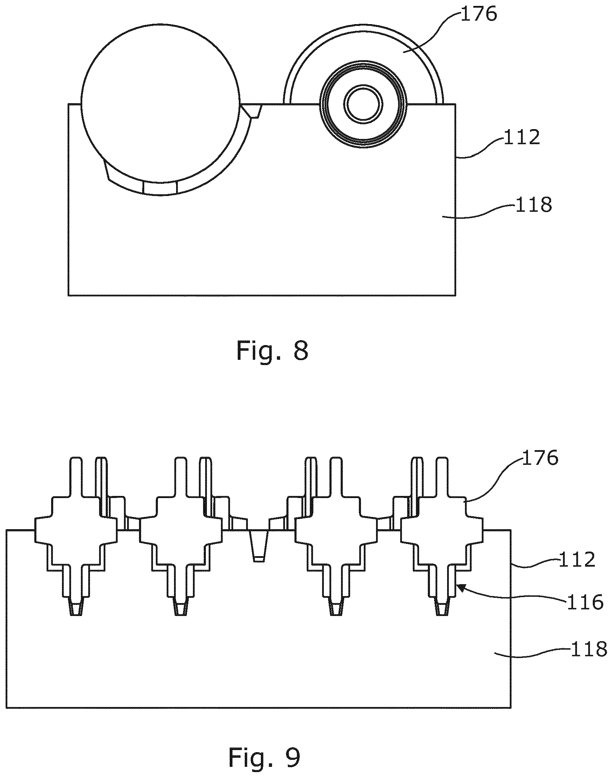

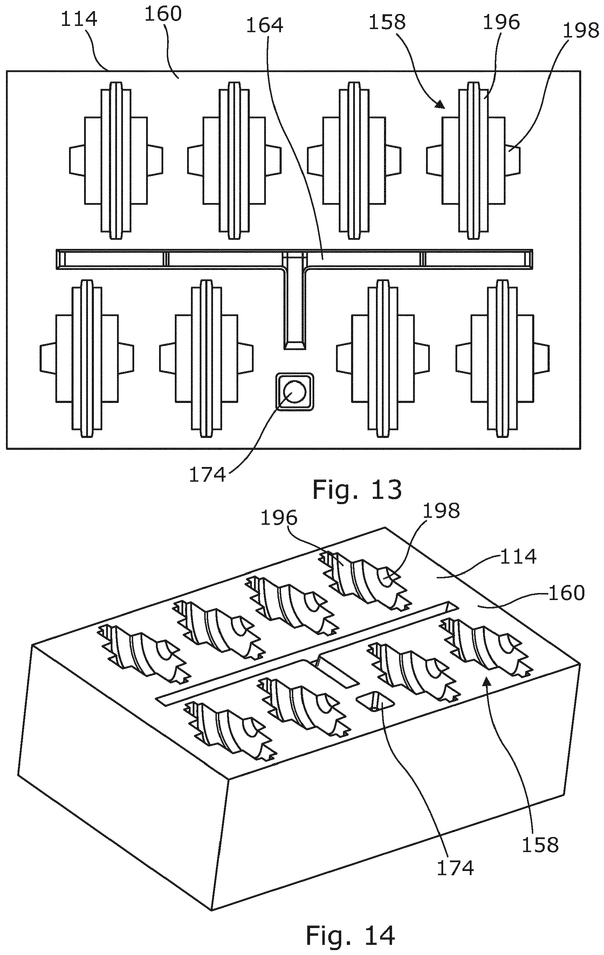

Figs 4 to 25 show various aspects of casting apparatus that may be used in the manufacturing method. General reference to those drawings will be made throughout this discussion, and specific reference to certain ones of those drawings will be made where a particular view shows a feature more clearly. To manufacture the disc 100, a mould 110 is provided. The mould 110 comprises a drag 112 (Figs 4 and 5) and a cope 114 (Figs 13 and 14). As is known in the art, the drag is a bottom part of a two-part casting mould or flask, whereas the cope is the upper part. The terms drag and cope will be used here with their conventional meanings. As will become apparent from this discussion, the casting apparatus disclosed herein provides a beneficial arrangement that allows an unusually large number of brake disc components to be manufactured using a single mould, thereby reducing the cost of manufacture of those components.

The drag 112 and cope 114, and the methods for producing them, will now be described in detail.

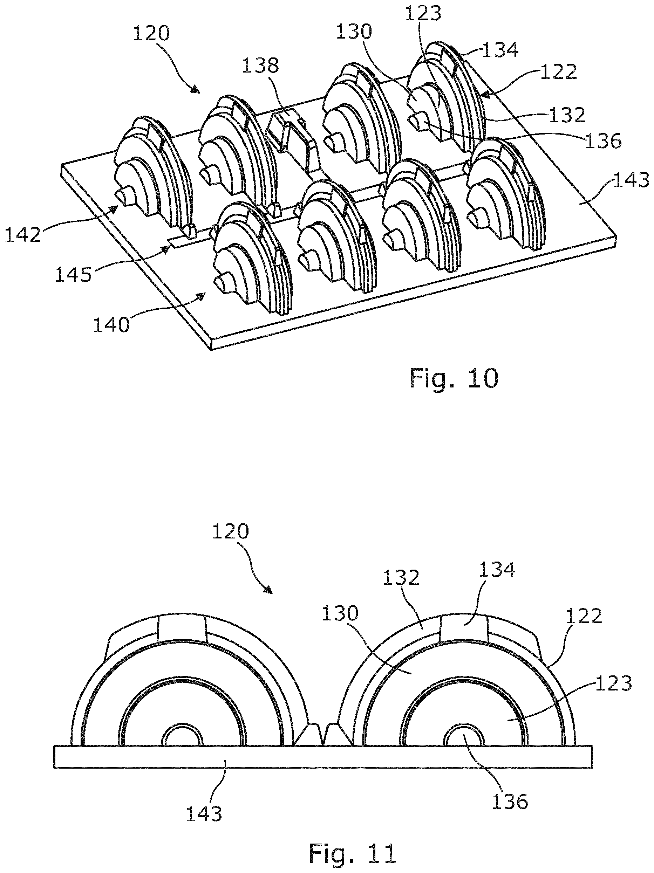

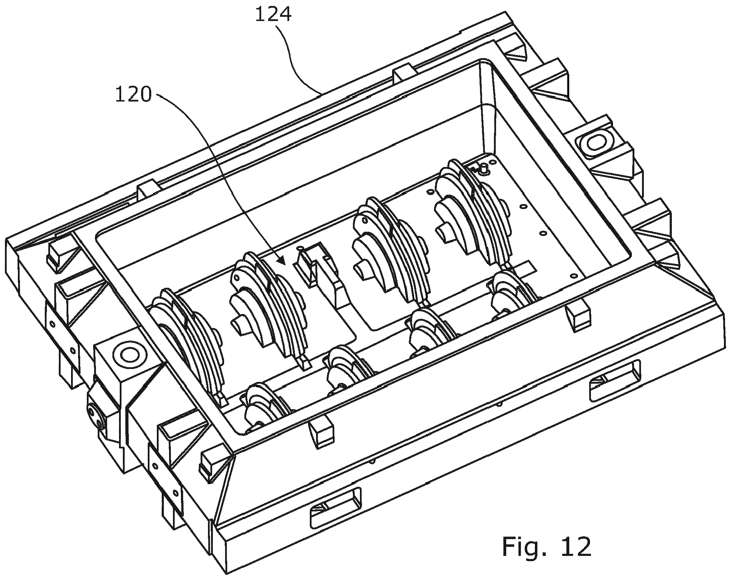

The drag 112 is prepared by forming a plurality of drag recesses 116 in moulding sand 118. This is done by placing a drag pattern plate 120 (see Figs 10 and 11) onto a surface (not shown), with drag protrusions 122 facing upwards (the drag protrusions are described in more detail below). As shown in Fig. 12 drag flask 124 is positioned above the drag pattern plate 120, and then the drag flask 124 is filled with the moulding sand 118 and tamped in a manner known to those skilled in the art. The filling and tamping may involve several layers of the sand. The drag pattern plate 120 is then carefully withdrawn from the moulding sand 118 to leave corresponding impressions. The result of this process is the drag 112 comprising a plurality of the drag recesses 116, as shown in Figs 4 and 5. The drag flask 124 is only shown in Fig. 12, and is omitted from the other Figs showing the drag 112 for clarity.

The drag pattern plate 120 will now be described in more detail with reference to Figs 10 and 11. Each drag protrusion 122 comprises a generally semi-circular outer disc brake component formation 130. A runner-forming formation 132 extends radially outwardly from a portion of the periphery of the outer disc brake component formation 130. A gate-forming formation 134 extends from the runner-forming formation 132 at its uppermost (when the drag pattern plate 120 is positioned with the drag protrusions 122 pointing upwardly) point.

An outer hat-forming formation 123 extends axially from each side of the outer disc brake component formation 130. A drag guide formation 136 extends axially from each of the outer hat-forming formations 123.

As best shown in Fig. 10, the drag protrusions 122 are laid out in a first row 140 and a second row 142. The drag protrusions are orientated such that ends of their respective runner-forming formations 132 meet a base portion 143 of the drag pattern plate 120 along a central line 145 along the base portion 143.

Separate to the drag protrusions 122, a basin-forming protrusion 138 is provided.

As best shown in Figs 4 and 5, once the drag 112 is prepared as described above using the drag pattern plate 120, each of the drag recesses 116 contains disc brake component features 186 corresponding to the outer disc brake component formations 130, a runner channel, or simply 'runner' 188 corresponding to the runner-forming formation 132, a gate 190 corresponding to the gate-forming formation 134, an outer hat feature 191 corresponding to the outer hat-forming formation 123, drag guides 192 corresponding to the drag guide formations 136, and a basin 194 corresponding to the basin-forming protrusion 138.

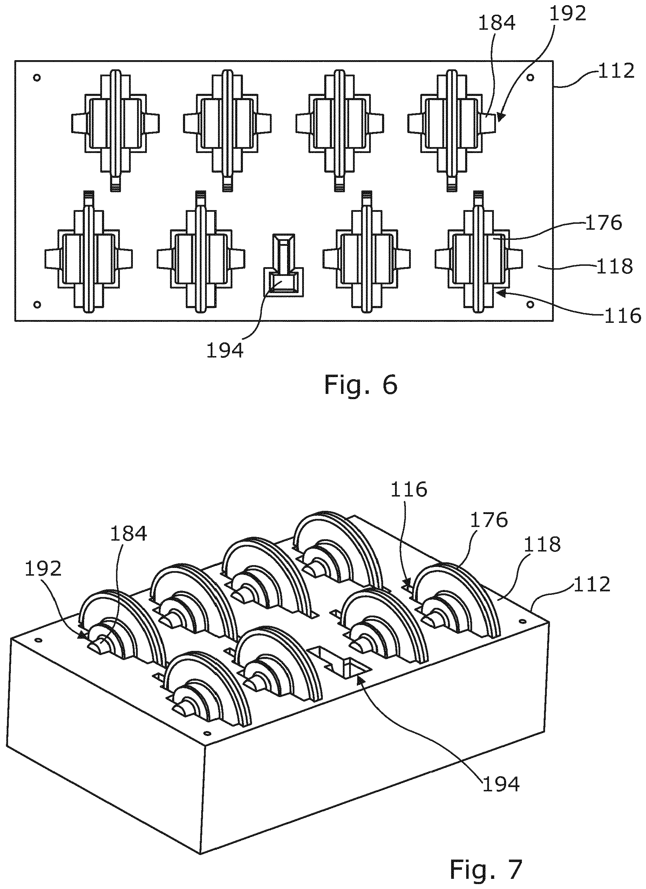

Turning to Figs 6 to 9, prior to casting, a core element 176 is disposed partly within each of the drag recesses 116. In the preferred embodiments, the core element 176 partitions its respective drag recess into two parts that correspond to two different brake discs as final products, as will become apparent. The core elements also cooperate with parts of the recesses to define fluid flow channels and gates to enable flow access into the recesses, as will also become apparent in the ongoing discussion.

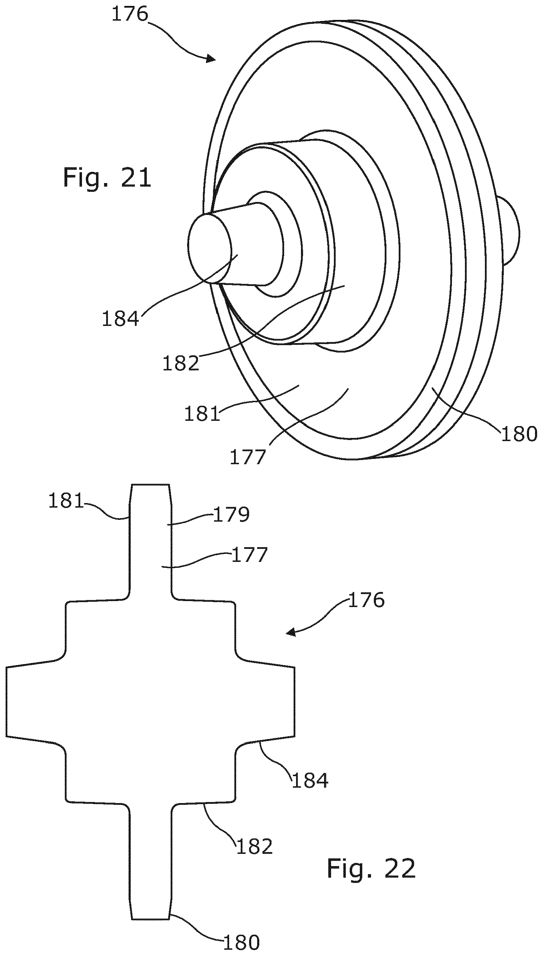

As best shown in Figs 21 and 22, each of the core elements 176 comprises a flange portion 177 comprising a first radial planar surface 179 and a second radial planar surface 181 generally parallel to the first radial planar surface 179. Inner hat-forming portions 182 extend axially away from the respective first and second radial planar surfaces 179 and 181. Guides 184 extend axially away from the respective inner hat-forming portions 182. A shallow bevel 180 is formed around the periphery of each of the first and second radial planar surfaces 179 and 181. In the embodiment of Figs 4 to 25, the core element 176 is symmetric about a radial plane through the flange portion 177, as well as being rotationally symmetric. Either or both types of symmetry are optional, depending on the embodiment.

The core element 176 may be formed from any suitable material(s), such as granular moulding materials (such as casting sand) bound with one or more binders (such as resin(s)) and optional property-manipulating additives (such as anti-veining additives), or a ceramics-based material. One or more coatings, such as refractory coating(s) and/or release agent(s), may be applied to an external surface of the core element 176 and/or impregnated into the core element 176.

As best shown in Figs 6 to 9, each core element 176 is positioned in one of the drag recesses 116 until the guides 184 are seated in the corresponding drag guides 192. This may include freehand and/or assisted manual positioning of the core elements 176 into the respective drag recesses 116. Alternatively, an automated or semi-automated mechanically-assisted process may be used, optionally including one or more robotic devices. In either case, jigs, guides and/or templates may be used to assist the positioning.

The drag guides 192 are configured to retain respective core elements 176 within the corresponding drag recesses 116. A section of each bevel 180 engages and retains a corresponding section of the drag recess 116. The outer edge of the flange portion 177 in this section forms an upper wall 200 of the runner 188, such that the runner 188 forms a tunnel through which molten metal can flow as described below.

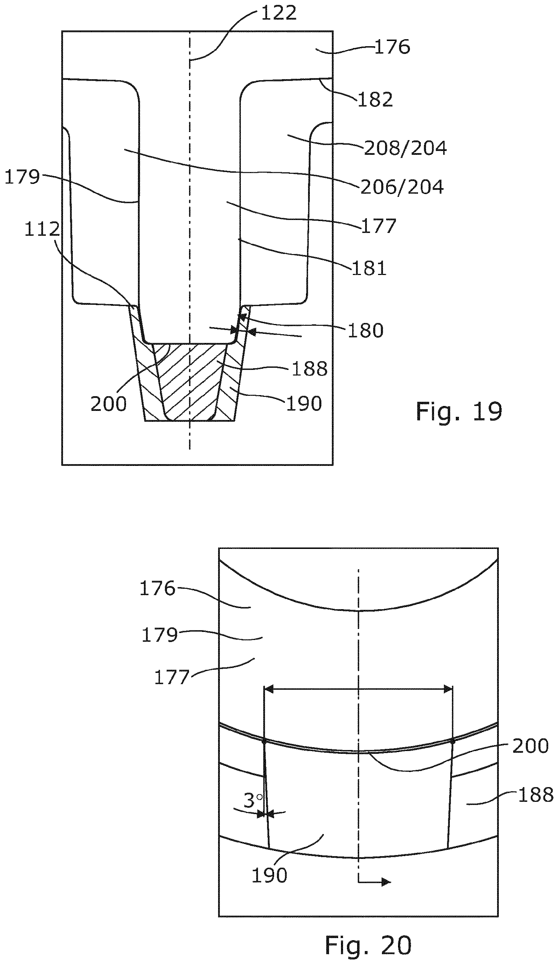

As best shown in Figs 19 and 20, the gate 190 is positioned at the lowermost point of the runner 188, and is axially wider than adjacent portions of the runner 188. This provides a space 212 adjacent the bevel 180 on each side of the core element 176 through which molten material may pass during casting, as described below.

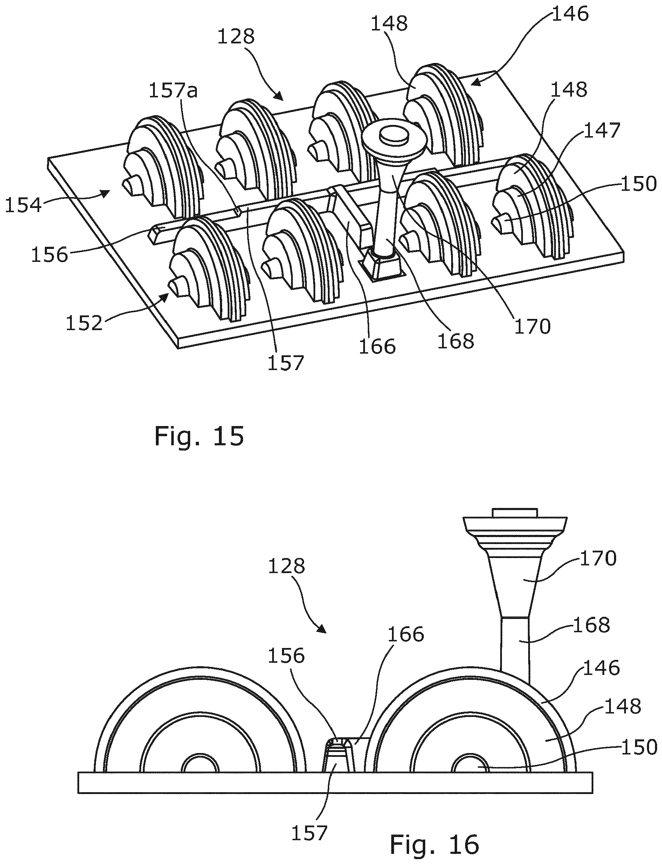

Turning to Figs 13 to 16, the cope 114 is prepared by forming a plurality of cope recesses 158 in moulding sand 160. This is done by placing the cope pattern plate 128 (Figs 15 and 16) onto a surface (not shown), with cope protrusions 146 facing upwards (the cope protrusions are described in more detail below). A funnel-forming element 170 is attached to the top of the sprue-forming element 168. A cope flask (not shown) is positioned on the cope in a similar manner to the positioning of the flask 124 on the drag 112, as shown in in Fig. 12. The cope flask is filled with moulding sand 160 and tamped in a manner known to those skilled in the art. The filling and tamping may involve several layers of the moulding sand 160. The cope pattern plate 128, sprue-forming element 168, and funnel forming element 170 are then carefully withdrawn from the moulding sand 160 to leave corresponding impressions.

The moulding sand 118 and 160 may be of any type suitable for casting the material of which the brake disc 100/210 is formed. Suitable binders (such as resin(s)) and/or other property-manipulating additives (such as anti-veining additives) may be added, as known to those skilled in the art. Other forms of granular or other suitable materials known to those skilled in the art may alternatively be employed.

The cope pattern plate 128 will now be described in more detail with reference to Figs 15 and 16. The illustrated cope pattern plate 128 has eight cope protrusions 146. When used with the complementary drag pattern plate 120 described above, this allows the simultaneous moulding of eight pairs of brake discs as described in more detail below. It will be appreciated that the drag pattern plate 120 and the cope pattern plate 128 may be designed with a number of protrusions 122/146 other than eight, where each protrusion 122/146 pair corresponds to a pair of brake discs as described in more detail below.

Each cope protrusion 146 comprises a generally semi-circular inner disc brake component formation 148. An outer hat-forming formation 147 extends axially from each side of the inner disc brake component formation 148. A cope guide formation 150 extends axially from each of the outer hat-forming formations 147.

As best shown in Fig. 15, the cope protrusions 146 are laid out in a third row 152 and a fourth row 154. The cope pattern plate 128 comprises a distribution void formation 156, which in this embodiment extends between the third row 152 and the fourth row 154 and has a branch 166, or 'central inlet' that extends towards a long edge of the cope pattern plate 128. The sprue-forming element 168 is positioned in line with the branch 166 and extends upwardly (when the cope pattern plate 128 is positioned with the cope protrusions 146 pointing upwardly). As can be seen from Figure 15, the distribution void formation 156 is generally elongate and, together with the branch 166, defines a distribution channel from where molten material can be distributed to the runners, via appropriate outlets, that extend away from arms 157 of the distribution void formation 156.

It can be seen in Figure 15 that the distribution void formation 156 has a cross section area that varies along its length; that is from the central inlet along the arms that radiate away from the central inlet. The cross section is relatively large at the central inlet and then tapers into a narrower cross section towards the outer ends of the arms. Here the distribution void formation tapers via one step.

The cross section is configured in correspondence with the number of runners that the distribution void must feed. So, considering one of the arms 157 of the distribution void formation 156, that arm has a relatively large cross section up to an approximate mid-point 157a, where it steps down to a narrower cross section. Beyond that step point, the distribution void is only required to feed two runners of opposite mould voids. This tapering helps to control the flow of molten material.

It will be understood that the cross-sectional area of any other void in the cope 114 or drag 112 through which molten metal flows may vary across some or all of its length in a way that ensures even filling of all the mould voids as described below. Such variations in cross-sectional area will be selected based on principles known to those skilled in the art.

Once the cope 114 is prepared, each of the cope recesses 158 includes disc brake component features 196 corresponding to the inner disc brake component formation 148, and a pair of cope guides 198, as best shown in Figs 13 and 14. A distribution void 164 is formed corresponding to the distribution void formation 156. In this embodiment, the distribution void 164 is not directly connected to the or each cope recess 158 in the cope 114. A funnel (not shown) and sprue 174 are formed corresponding respectively to the funnel-forming element 170 and sprue-forming element 168.

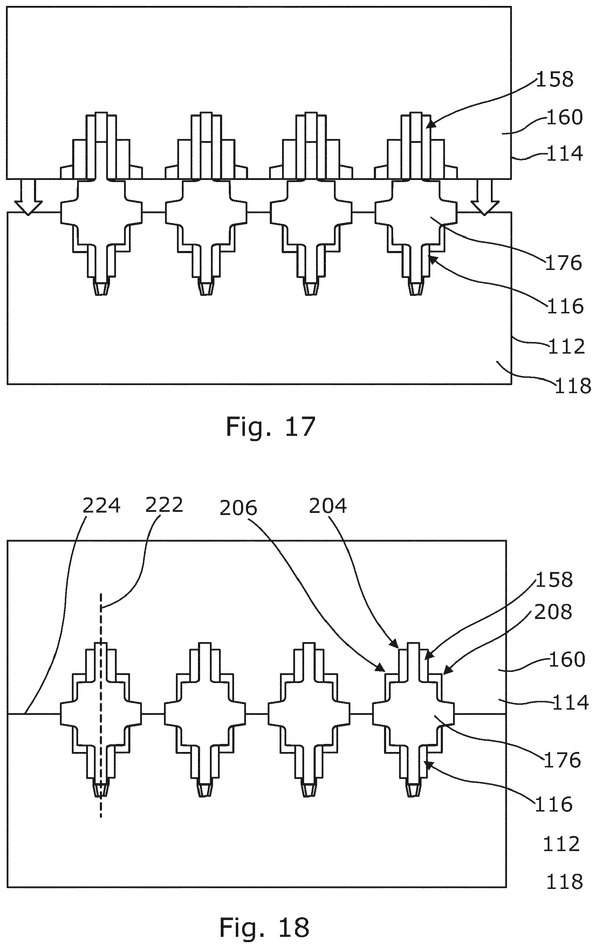

Once the core elements 176 are in place within the drag recesses 116, the cope 114 is positioned above the drag 112 as shown in Fig. 17, and then lowered onto the drag 112 until it is positioned as shown in Fig. 18. The cope 114 and drag 112 are configured to mate at a generally planar interface that defines an interface plane 224. In practice, the cope and drag will be oriented horizontally, so that the interface plane or 'split plane' is also horizontal.

Once the cope 114 is in the position shown in Fig. 18, each of the cope recesses 158 is aligned (in plan) with one of the drag recesses 116 to form a mould void 204. In the embodiment of Figs 4 to 25, each mould void 204 is generally discoidal and defines a vertical disc plane 222 that is substantially normal to the interface plane 224. In the embodiment of Figs 4 to 25, the interface plane 224 intersects the disc plane 222 so as to substantially bisect each mould void 204 horizontally.

Each core element 176 extends into the cope recess 158 above it. As best shown in Figs 18 and 19, the position of the core element 176 is such that it partitions each mould void 204 into a first cavity void 206 comprising a first void portion and a second cavity void 208 comprising a second void portion. Each of the first cavity void 206 and second cavity voids 208 defines a casting space corresponding to a brake disc component in the form of a brake disc, such as the brake disc 100 shown in Fig. 1. Molten material injected into that space therefore forms a brake disc component when cooled.

In the embodiment shown in Figs 4 to 25, the mould voids 204 are arranged in a horizontal array, in which all of the mould voids 204 are disposed at the same vertical position within the drag 112 and cope 114. It will be appreciated, however, that the mould voids 204 need not all be disposed at the same vertical position, nor need there be any symmetry or linearity to the relative positions of the mould voids 204 in plan.

Once the mould is prepared as shown in Fig. 18, molten metal is prepared in a manner known to those skilled in the art. The metal may be iron, or any other metal or alloy, including additives to modify the metal's moulding or performance characteristics. For example, cast iron having a CE (equivalent carbon content) of 4.15-4.30% may be used, alloyed with 0.13-0.15% chromium and 0.5-0.7% copper. An inoculant comprising small amounts of elements such as silicon, calcium, and cerium may also be added. The target pouring temperature may be, for example, 1360-1395° Celsius.

Alternatively, other pourable moulding materials may be used, such as other metals, plastics, ceramics, resins, or pourable composites.

The molten metal is poured into the funnel (not shown) using, for example, a ladle (not shown). The molten metal moves through the funnel under the force of gravity, enters the sprue 174 and continues downwardly until it encounters the basin 194. The weight of the molten metal in the sprue 174 and funnel pushes the molten metal through the basin 194, up into the branch 166 and into the distribution void 164 at a central inlet 164a. The molten metal spreads horizontally through the distribution void 164, enters the upper ends of the runners 188 under the force of gravity, and then passes through the runners 188 until it reaches the respective gates 190. Alternatively, a pressurised system may be used in which molten metal is contained within a somewhat pressurised chamber and fed into the sprue. Such systems are general known in the art and so a further discussion is not necessary for understanding the invention.

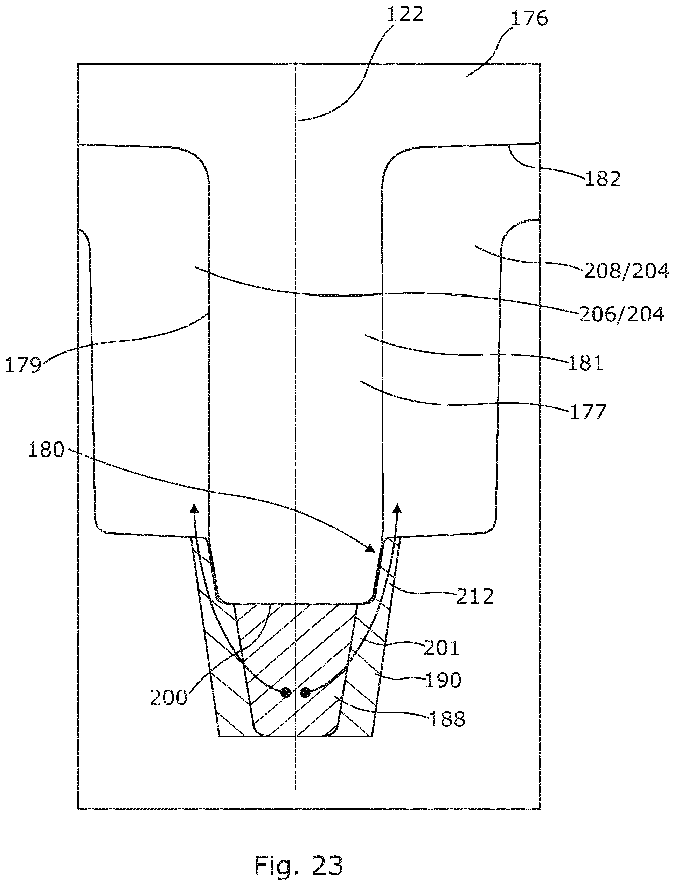

The weight of the molten metal above the gate 190 pushes the molten metal through the gate 190, where it encounters the lower edge 200 of the core element's flange portion 178. As best shown in Fig. 23, the molten metal flows around the lower edge 200 as indicated by arrows 201, and into the first cavity void 206 and the second cavity void 208. The molten metal continues flowing until it fills each of the first and second cavity voids 206 and 208. Although not shown here, a vent may be included to allow air to evacuate from the mould void during filling.

The pouring rate may be, for example, about 9.9kg/sec, which may result in a pour time of, for example, about 19 seconds.

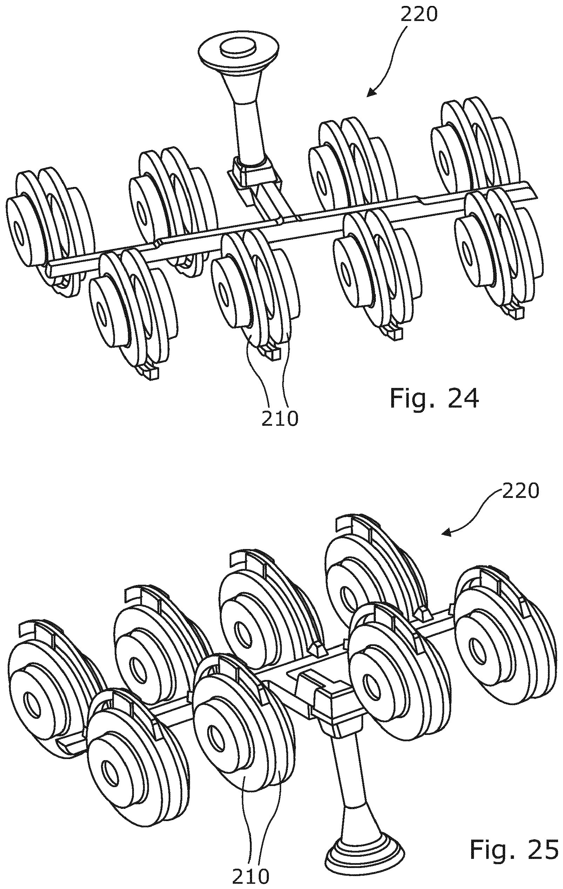

The molten metal is allowed to cool in the mould. Once solidified and sufficiently cool (for example, at around 590 degrees Celsius), the cast metal is removed from the mould using techniques known to those skilled in the art. Excess casting sand that may cling to the cast metal parts may be removed by suitable techniques such as shaking or air blasting. The resultant cast 220 is shown in Figs 24 and 25. Portions of the cast 220 corresponding to the runners 188, distribution void 164, funnel (not shown), sprue 174 and basin 194 are cut away from the portions of the cast 220 corresponding to the mould void 204.

The partitioning of the mould void 204 into the first and second cavity voids results in a pair of brake discs 210 being cast in each mould void 204. The core element 176 has been removed from the cast 220 in the example shown in Figs 24 and 25 prior to separation of the pairs of brake discs 210 from each other. Alternatively, the core element 176 may be left in place until the pair of brake discs 210 is detached from portions of the cast 220 corresponding to the runners 188. Each pair of brake discs 210 can then be parted from each other by separating them from the core element 176.

The result is a plurality of unfinished moulded products, each comprising a disc brake component in the form of an unfinished brake disc 210. Each brake disc 210 has a generally circular planar braking region. The unfinished brake disc 210 may comprise at least a partial diametric horizontal flash line (not shown) across only one of its sides. Machining operations such as turning, milling, and drilling may then be performed on each unfinished brake disc 210 to complete it.

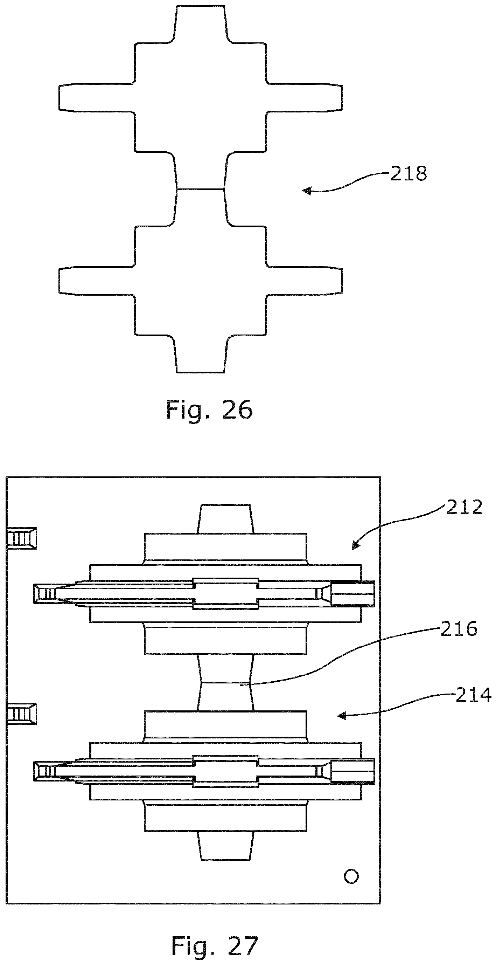

The core element 176 may take other forms. For example, a single core element may sit within more than one of the drag recesses. As shown in Fig. 27, adjacent drag recesses 212 and 214 may share a drag guide 216 that extends between them. This arrangement enables the use of a core element 218 as shown in Fig. 26, which spans the drag recesses 212 and 214. Although only two drag recesses 212 and 214 are shown in the example of Figs 26 and 27, it will be appreciated that up to an entire row of drag recesses may share a single core element.

The embodiment of Figs 4 to 25 involves brake discs comprising an axial hat 106. It will be appreciated that in other embodiments, the hat 106 may have a different shape or configuration. In yet other embodiments, the brake disc component may take the form of a brake disc ring (not shown) that does not include a hat 106. In such embodiments, the core element 176 need not include hat-forming portions 182. Instead, the guides 184 may extend axially from each side of the flange portion 178. Alternatively, if a thinner flange portion is required at the radially inner edge of the flange portion, the core element 176 may include an axially-extending formation on each side to form the flange portion.

Optionally, the core element 176, drag 112 and/or cope 114 may include formations corresponding to one or more mounting elements in the brake disc ring, such as radially inwardly extending mounting tabs.

Any required mounting elements (such as a hat, rotor, hub, flange or mounting tabs, for example) may be formed or modified after casting by, for example, machining. Alternatively, any required mounting elements may be added to the cast component using any suitable attachment process or combination thereof, including welding, brazing, sintering, 3D printing, moulding (including co-moulding) and bonding.

Although the embodiment of Figs 4 to 25 involves moulding pairs of the brake disc 210 in each mould void 204, a single vertical brake disc 210 may be moulded using differently shaped cope and drag protrusions 122 and 146, and/or a differently shaped core element. In such an embodiment, the core element does not necessarily need to extend all the way up into the cope, because that section of the component can be moulded without the need for an insert. For example, a corresponding insert could be formed as an integral projection in the cope recess.

Although the invention has been described with reference to a number of specific non-exhaustive and non-limiting embodiments, the skilled person will appreciate that the invention may be embodied in many other forms.

## Claims

1. A casting apparatus for casting brake disc components, the casting apparatus comprising:
a drag (114), and a cope (112), which are cooperable to form a mould and which are configured to mate at a generally planar interface that defines an interface plane (224),
wherein the drag (114) comprises a plurality of drag recesses (116), and wherein the cope (112) comprises a plurality of cope recesses (158), such that when the drag and the cope are combined, said plurality of drag and cope recesses form a respective plurality of mould voids (204) which are discoidal in form so as to produce respective brake disc components therein, wherein each of the discoidal mould voids defines a disc plane (222), and wherein the interface plane (224) is substantially normal to the disc plane (222),
**characterised in that**
the mould includes a runner (188) configured to feed each one of the mould voids (204) wherein the mould includes a distribution void (164) that is configured to feed each of the runners (188) and the distribution void (164) has a variable cross section along its length, the the distribution void (164) being configured to define a central inlet and one or more arms that radiate away from the central inlet, wherein the runners extend from respective positions along the arms towards respective mould voids and wherein the distribution void (164) has a relatively large cross section proximal to its central inlet, and wherein the cross section of the arms of the distribution void reduces in correspondence to the number of runners (188) that are to be fed by the distribution void.

2. The casting apparatus of claim 1, wherein the interface plane (224) intersects the disc plane (222).

3. The casting apparatus of claim 2, wherein the interface plane (224) substantially bisects the or each mould void (204).

4. The casting apparatus of claims 1 to 3, wherein each of the mould voids (204) receives a core element (176) that partitions the mould void into at least a first void portion (207) within which a brake disc component may be produced.

5. The casting apparatus of claims 1 to 4, wherein the core element (176) further partitions the mould void (204) into a second void portion (209) within which a further brake disc component may be produced from the same mould void.

6. The casting apparatus of claims 4 or 5, wherein the core element (176) cooperates with at least a part of the mould void (204) to define a respective runner (188) for that mould void (204) so that molten material can be supplied thereto.

7. The casting apparatus of claims 1 to 6, wherein the plurality of mould voids are arranged into at least one row that is arranged linearly so that the disc planes of each of the mould voids are generally mutually parallel.

8. A method for use in the manufacture of at least one brake disc component (100, 210), the method comprising:
providing a mould (110), the mould comprising:
a drag (112) comprising a plurality of drag recesses (116); and
a cope (114) comprising a plurality of cope recesses (158),
wherein the drag and the cope are configured to mate at a generally planar interface that defines an interface plane (224);
wherein each of the cope recesses (158) aligns with a corresponding one of the at least one drag recesses (116) to define a mould void (204) when the cope (114) and drag (112) are assembled prior to a subsequent casting process;
wherein each of the mould voids (204) are discoidal in form so as to produce respective brake disc component therein during casting, wherein each of the discoidal mould voids defines a disc plane (222) and wherein the interface plane (224) is transverse to the disc plane.

9. The method of claim 8, wherein the interface plane (224) intersects the disc plane (222).

10. The method of claim 9, wherein the interface plane (224) substantially bisects the mould voids (204).

11. The method of claims 8 to 10, wherein the drag is configured to define runner channels, each runner channel being configured to extend underneath a respective one of the mould voids so as to feed molten material thereto.

12. The method of claim 11, including configuring the cope or the drag to define a distribution channel (164) having a central inlet and one or more distribution arms (157) radiating away from the central inlet and from which the runners extend.

13. The method of claim 8, wherein the distribution channel has a relatively large cross section proximal to its central inlet, and wherein the cross section of the arms of the distribution channel reduces in correspondence to the number of runners (188) that are to be fed by the distribution channel.

14. The method of claims 8 to 13, further including receiving a core element (176) into each of the mould voids (204) so as to partition those mould voids into at least a first mould portion within which a brake disc component may be produced.

15. The method of claim 14, wherein the core element (176) further partitions the mould void (204) into a second void portion (209) within which a further brake disc component may be produced from the same mould void.

16. The method of claims 14 or 15, when dependent on claim 11, wherein the core element (176) cooperates with at least a part of the mould void (204) to define a respective runner (188) for that mould void (204) so that molten material can be supplied thereto.

17. The method of claim 11, wherein the runner includes a gate which permits molten material to flow into the mould void from the runner.

18. A pattern plate for use in the apparatus of claims 1 to 7 or the method of claims 8 to 17, wherein the pattern plate comprises a planar base and a plurality of protrusions projecting from the base, the plurality of protrusions forming a plurality of discoidal brake disc formations (130) each defining a disc plane, wherein the disc planes of each of the plurality of brake disc formations are generally mutually parallel and generally normal to the base.

19. The pattern plate of claim 18, wherein each of the brake disc formations include a runner-forming formation (132) extending from a respective one of the brake disc formations.

20. The pattern plate of claim 19, wherein each of the runner-forming formations (132) includes a gate-forming formation (134) extending therefrom.

21. The pattern plate of claims 18 to 20, wherein each of the protrusions defines a drag guide formation configured to form, in a respective drag, a guide for cooperating with a core element.

22. The pattern plate of claim 18, comprising a cope guide formation (150) configured to form, in a respective cope (114), a cope guide (198) for the core element (176).

23. The pattern plate of claim 18 or claim 22, comprising at least one distribution void formation (156), wherein when the pattern plate (128) is used to form the cope (114), the or each distribution void formation (156) forms a distribution void (164) in the form of a recess in the cope (114) that is not directly connected, in the cope (114), to the or each cope recess (158).

24. The pattern plate of claim 23, wherein the distribution void (164) has a variable cross section along its length.

25. The pattern plate of claim 24, wherein the distribution void (164) is configured to define a central inlet and one or more arms that radiate away from the central inlet,

26. The pattern plate of claim 25, wherein the distribution void (164) has a relatively large cross section proximal to its central inlet, and wherein the cross section of the arms of the distribution void reduces in correspondence to the number of outlets (188) that are to be fed by the distribution void.

27. A moulded brake disc component manufactured using:
the casting apparatus of claims 1 to 7;
the method apparatus of claims 8 to 17;
the pattern plate of claims 18 to 26.
